# EUROPÄISCHE PATENTANMELDUNG

(11) **EP 3 324 387 A1**
(43) Veröffentlichungstag der Anmeldung: **23.05.2018**
(21) Anmeldenummer: 17202334.3
(22) Anmeldetag: 17.11.2017
(51) Int. Cl.: G09B 21/00

(54) **LEITSYSTEM UND -VERFAHREN, INSBESONDERE FÜR SEHBEHINDERTE PERSONEN**

(30) Priorität: 18.11.2016 DE 102016122258
(71) Anmelder: Schaefer GmbH, 72488 Sigmaringen (DE)
(72) Erfinder: VON RODA, Marcus, 99334 Amt Wachsenburg (DE); PANIER, Jan, 99482 Ruhla (DE)
(74) Vertreter: Rüger, Barthelt & Abel

(57) **Zusammenfassung**

Das erfindungsgemäße Leitsystem für Personen zum Leiten der Person (N) durch einen Raum oder ein Gelände weist wenigstens eine Erfassungseinheit (A, A1, A2) mit einem Erfassungsbereich (EB) zum Erfassen der Person (N) in dem Raum oder Gelände und wenigstens einen, vorzugsweise akustischen, Signalgeber (L) auf, der dazu eingerichtet ist, ein, vorzugsweise akustisches, Leitsignal an die Person (N) unter der Bedingung abzugeben, dass die Person (N) durch die Erfassungseinheit (A, A1, A2) erfasst wurde, um der Person (N) zu ermöglichen, ihre Position in Bezug auf den Signalgeber (L) in dem Raum oder Gelände, beispielsweise mittels akustischer Wahrnehmung des Leitsignals, zu lokalisieren, wobei die Erfassungseinheit (A, A1, A2) dazu eingerichtet ist, die Person (N) zu erfassen, indem die Erfassungseinheit (A, A1, A2) ein von der Person (N) mitgeführtes Erfassungsobjekt (M) erfasst. Das erfindungsgemäße Verfahren zum Leiten einer Person, insbesondere einer sehbehinderten Person, mit einem Leitsystem umfasst das Erfassen des von der Person (N) mitgeführten Erfassungsobjektes (M) mittels der Erfassungseinheit (A, A1, A2), und, auf Grund des Erfassens des Erfassungsobjekts (M), das Veranlassen des Signalgebers (L) zur Leitsignalabgabe an die Person (N), so dass die Person (N) das Leitsignal wahrnimmt, so dass die Person (N) die Position des Signalgebers (L) auf Grund des Leitsignals lokalisieren kann.

## Beschreibung

Die Erfindung betrifft ein Leitsystem und ein Verfahren zum Leiten einer Person.

Erfindungsgemäß wird ein Leitsystem nach Anspruch 1 und ein Verfahren zum Leiten einer Person nach Anspruch 13 bereitgestellt.

Das erfindungsgemäße Leitsystem gemäß Anspruch 1 für Personen, insbesondere sehbehinderte, beispielsweise blinde, Personen, zum Leiten der Person durch einen Raum oder ein Gelände, bei dem es sich beispielsweise um einen geschlossenen Raum (z.B. ein Gebäude) oder einen offenen Bereich (z.B. einen Park, einen Marktplatz oder eine Straßenkreuzung) handeln kann, weist wenigstens eine Erfassungseinheit mit einem Erfassungsbereich zum Erfassen der Person in dem Raum oder Gelände und wenigstens einen, vorzugsweise akustischen, Signalgeber auf, der dazu eingerichtet ist, ein, vorzugsweise akustisches, Leitsignal an die Person unter der Bedingung abzugeben, dass die Person durch die Erfassungseinheit erfasst wurde, um der Person zu ermöglichen, ihre Position in Bezug auf den Signalgeber in dem Raum oder Gelände, beispielsweise mittels akustischer Wahrnehmung des Leitsignals, zu lokalisieren, wobei die Erfassungseinheit dazu eingerichtet ist, die Person zu erfassen, indem die Erfassungseinheit ein von der Person mitgeführtes Erfassungsobjekt erfasst.

Das erfindungsgemäße Verfahren gemäß Anspruch 13 zum Leiten einer Person, insbesondere einer sehbehinderten Person, mit einem erfindungsgemäßen Leitsystem nach einem der Ansprüche 1 bis 12 umfasst den Schritt des Erfassens des von der Person mitgeführten Erfassungsobjektes mittels der Erfassungseinheit und den Schritt des, auf Grund des Erfassens des Erfassungsobjekts, Veranlassens des Signalgebers zur Leitsignalabgabe an die Person, so dass die Person das Leitsignal wahrnimmt, so dass die Person die Position des Signalgebers auf Grund des Leitsignals lokalisieren kann.

Das erfindungsgemäße Leitsystem und das erfindungsgemäße Verfahren können mit einem oder mehreren der nachfolgend beschriebenen Merkmale und/oder wenigstens einem Merkmal eines oder mehrerer Unteransprüche weitergebildet werden.

Die Erfassungseinheit kann dazu eingerichtet sein, die Anwesenheit oder die Position des Erfassungsobjektes in dem Erfassungsbereich der Erfassungseinheit zu erfassen.

Zusätzlich oder alternativ kann die Erfassungseinheit dazu eingerichtet sein, das Erfassungsobjekt zu erfassen, indem die Erfassungseinheit ein von dem Erfassungsobjekt abgegebenes Erfassungssignal empfängt, das beispielsweise ein Funksignal sein kann.

Die Erfassungseinheit kann zusätzlich oder alternativ zur Abgabe eines Aktivierungssignals eingerichtet sein und das Erfassungsobjekt kann dazu eingerichtet sein, durch das Empfangen des Aktivierungssignals in einen Betriebsmodus versetzt zu werden, in dem das Erfassungsobjekt das Erfassungssignal abgibt, um durch die Erfassungseinheit erfasst zu werden.

In einer Erfassungseinheit können ein oder mehrere Signalgeber integriert sein.

Das erfindungsgemäße Leitsystem kann in zumindest einer Ausführungsform einen ersten Signalgeber und vorzugsweise einen zweiten Signalgeber aufweisen, wobei das Leitsystem zur Navigation der Person durch den Raum oder das Gelände eingerichtet sein kann, indem mittels der Erfassungseinheit festgestellt wird, wenn die Person einen Nahbereich an dem ersten Signalgeber betritt, und unter der Bedingung, dass das Betreten des Nahbereichs festgestellt wurde, die Stärke des Leitsignals des ersten Signalgebers, insbesondere die Lautstärke eines akustischen Leitsignals des Signalgebers, reduziert wird oder die Leitsignalabgabe des ersten Signalgebers unterbrochen oder ausgeschaltet wird und/oder der erste Signalgeber einen der Position des ersten Signalgebers entsprechenden Hinweis akustisch an die Person ausgibt und/oder der zweite Signalgeber, der beispielsweise näher an einem gewünschten Ziel der Person in dem Raum oder Gelände sein kann als der erste Signalgeber, ein von der Person wahrnehmbares, insbesondere akustisches Signal, abgibt. Wenn das Leitsystem zur Navigation der Person durch den Raum oder das Gelände eingerichtet ist, indem, wenn die Person einen Nahbereich an dem ersten Signalgeber betritt, dies mittels der Erfassungseinheit festgestellt wird und unter der Bedingung, dass das Betreten des Nahbereichs festgestellt wurde, der zweite Signalgeber, der vorzugsweise entlang einer Route zum Ziel näher an einem gewünschten Ziel der Person in dem Raum oder dem Gelände sein kann, als der erste Signalgeber, das von der Person wahrnehmbare, insbesondere akustische Signal, abgibt, kann die Person auf Grund dieses Leitsignals des zweiten Signalgebers ihre Position in Bezug auf den zweiten Signalgeber bzw. die Position des zweiten Signalgebers in Bezug auf ihre Position lokalisieren und sich auf Grund dessen geleitet von dem Leitsignal des zweiten Signalgebers zu dem zweiten Signalgeber begeben. Die Person kann durch das Leitsystem so von Signalgeber zu Signalgeber mittels des Leitsignals des Signalgebers geleitet werden, der vorzugsweise entlang einer Route zum Ziel näher an dem Ziel der Person ist. In bevorzugten Ausführungsbeispielen ist an dem zweiten Signalgeber ein Nahbereich festgelegt, den die Person betreten kann, wobei unter der Bedingung, dass das Betreten des Nahbereichs an dem zweiten Signalgeber festgestellt wurde, ein vorzugsweise vorhandener dritter Signalgeber, der beispielsweise noch näher an einem gewünschten Ziel der Person in dem Raum oder Gelände sein kann als der zweite Signalgeber, ein von der Person wahrnehmbares, insbesondere akustisches Signal, abgeben kann, so dass sich die Person geleitet von diesem Leitsignal des dritten Signalgebers zu dem dritten Signalgeber begeben kann. Entsprechend kann das Leitsystem noch weitere Signalgeber aufweisen. Diese können noch näher an dem Ziel der Person sein, als der dritte Signalgeber.

Das Leitsystem zur Navigation der Person durch den Raum oder das Gelände kann in Ausführungsbeispielen dazu eingerichtet sein, dass in dem Moment, in dem die Person den Nahbereich an dem ersten Signalgeber betritt, die Leitsignalabgaben aller Signalgeber des Leitsystems, die gerade Leitsignale abgeben, unterbrochen werden.

Das Leitsystem kann in Ausführungsbeispielen derart eingerichtet sein, dass mittels der Erfassungseinheit festgestellt wird, wenn die Person einen Nahbereich an dem ersten Signalgeber betritt, und dass auf Grund der Feststellung ein der Position des Signalgebers entsprechender Hinweis, vorzugsweise akustisch, an die Person durch das Erfassungsobjekt ausgegeben wird.

Das Erfassungsobjekt kann dazu eingerichtet sein, der Erfassungseinheit, insbesondere zum Erfassen des Erfassungsobjektes durch die Erfassungseinheit, Daten zu übermitteln. Zusätzlich oder alternativ kann die Erfassungseinheit dazu eingerichtet sein, Daten an das Erfassungsobjekt zu übermitteln. Die Datenübermittlung kann beispielsweise nach dem Bluetooth-Standard, insbesondere nach dem Bluetooth-Low-Energy-Standard, arbeiten.

Das Erfassungsobjekt kann ein mobiles, tragbares elektronisches Gerät, beispielsweise ein Mobiltelefon, beispielsweise ein Smartphone, ein Tablet-Computer, ein tragbarer Computer, beispielsweise ein Laptop, oder ein tragbares digitales Medienabspielgerät, sein.

Ein oder mehrere Signalgeber und/oder ein oder mehrere Erfassungseinheiten des Leitsystems können an festen Positionen in dem Raum oder dem Gelände angeordnet sein.

Je nach Größe des Raumes oder des Geländes können beispielsweise weniger als zehn oder mehr, beispielsweise mehrere zehn oder sogar hunderte Erfassungseinheiten und/oder Signalgeber des Leitsystems in dem Raum oder dem Gebäude angeordnet sein.

Bei dem gewünschten Ziel der Person kann es sich beispielsweise um eine Einrichtung eines Gebäudes, wie beispielsweise eine Toilette oder einen Aufzug handeln. Entsprechend können die Signalgeber beispielsweise an Einrichtungen des Gebäudes angeordnet sein. Ein Signalgeber kann beispielsweise an einem Eingang zu einer Toilette und/oder ein Signalgeber kann beispielsweise an einem Aufzug angeordnet sein. Beispielsweise kann an einer solchen Einrichtung oder an einer anderen Einrichtung eine Erfassungseinheit mit integriertem Signalgeber angeordnet sein.

Das Leitsystem kann wenigstens eine mobile, tragbare Erfassungseinheit mit Signalgeber aufweisen, um die Erfassungseinheit an wechselnden Positionen im Raum oder im Gelände anordnen zu können.

Das Verfahren zum Leiten einer Person kann die Schritte Abgeben eines Aktivierungssignals durch die Erfassungseinheit, Erfassen des Aktivierungssignals durch das Erfassungsobjekt und Einschalten eines Betriebsmodus des Erfassungsobjekts auf Grund des Erfassens des Aktivierungssignals, in dem Betriebsmodus das Erfassungsobjekt ein Erfassungssignal an die Erfassungseinheit abgibt, so dass die Erfassungseinheit das von der Person mitgeführte Erfassungsobjekt erfasst.

Alternativ oder zusätzlich kann das Verfahren die Schritte Betreten eines Nahbereichs an dem Signalgeber als einem ersten Signalgeber, Übermitteln eines gewünschten Ziels in dem Raum oder Gelände an eine Navigationseinheit, wobei die Navigationseinheit beispielsweise in den ersten Signalgeber und/oder einen weiteren Signalgeber und/oder eine Erfassungseinheit integriert sein kann, Feststellen einer Route durch den Raum oder das Gelände zu dem Ziel durch die Navigationseinheit, Ermitteln einer Gruppe Signalgeber in Hörweite von dem ersten Signalgeber durch die Navigationseinheit, wobei das Ermitteln beispielsweise durch Ermitteln der weiteren Signalgeber aus einer Datenbank erfolgen kann, Ermitteln einer Untergruppe derjenigen Signalgeber der Gruppe, die an der Route angeordnet sind, und Veranlassen eines der Signalgeber der Untergruppe, vorzugsweise desjenigen Signalgebers, der am weitesten von dem ersten Signalgeber entfernt ist, zur Abgabe eines Leitsignals an die Person aufweisen.

Bei dem Ermitteln einer Route durch den Raum oder das Gelände zu dem Ziel durch die Navigationseinheit berücksichtigt die Navigationseinheit vorzugsweise auch aktuelle Bedingungen in dem Raum oder dem Gelände, beispielsweise versperrte Wege oder Wege mit hohen Benutzeraufkommen, die ein Durchkommen entlang dieser Wege erschweren würden.

Auf dem Erfassungsobjekt des Leitsystems kann eine Software zum Initiieren einer Verbindung zu einer Erfassungseinheit lauffähig sein, wobei das Verfahren zusätzlich oder alternativ aufweisen kann, dass dem Betriebssystem des Erfassungsobjekts mitgeteilt wird, auf welchen Identifikatorwert es in der Umgebung des Erfassungsobjekts achten soll, wobei den Erfassungseinheiten eine solche Kennung zugewiesen ist, die diese in ihre Umgebung senden, das Betriebssystem, wird dieser Identifikatorwert vom Betriebssystem des Erfassungsobjekts erkannt, dies der Software mitteilt und diese damit aufweckt, die Software auf dem Erfassungsobjekt die Verbindung zu der Erfassungseinheit initiiert, um über diese Verbindung Daten auszutauschen.

Die Erfassungseinheit kann ein Central-Modul und das Erfassungsobjekt ein Peripheral-Modul sein (beispielsweise nach dem Bluetooth Low Energy Standard), um die Software aufzuwecken und dem Erfassungsobjekt mitzuteilen, dass eine Verbindung hergestellt werden soll, wobei das Erfassungsobjekt und die Erfassungseinheit anschließend bevorzugt die Rollen wechseln, so dass das Erfassungsobjekt das Central-Modul und die Erfassungseinheit das Peripheral-Modul ist.

In dem Verfahren können über die Verbindung vorzugsweise Daten ausgetauscht werden, so dass der die Erfassungseinheit vorzugsweise weiß, wohin das Erfassungsobjekt geleitet werden soll und/oder das Erfassungsobjekt vorzugsweise weiß, was die Erfassungseinheit an Informationen bereithält.

Erfassungseinheiten des erfindungsgemäßen Leitsystems können auch als Anker bezeichnet werden. Diese können einen integrierten Signalgeber, insbesondere einen Lautsprecher, zur Leitsignalabgabe aufweisen. Zur Erfassung eines von der Person mitgeführten Erfassungsobjektes können die Anker beispielsweise ein Bluetooth-Signal, insbesondere ein Bluetooth-Low-Energy-Signal, beispielsweise ein Advertisement, erfassen, das von dem Erfassungsobjekt, beispielsweise einem Mobiltelefon, ausgesendet werden kann.

An dem erfindungsgemäßen Leitsystem und Verfahren wird als vorteilhaft erachtet, dass das Erfassungsobjekt, beispielsweise ein Mobiltelefon, in zumindest einer Ausführungsform genutzt werden kann, ohne dass die Person das Erfassungsobjekt während des Leitens durch den Raum oder das Gelände in der Hand halten und beobachten muss. Das Erfassungsobjekt bildet in einer Ausführungsform ein Etikett (Tag), insbesondere ein Funketikett. Die Person muss sich in diesen Ausführungsformen nicht auf das Erfassungsobjekt, beispielsweise das Mobiltelefon, konzentrieren und kann beispielsweise Hilfsmittel nutzen, für die die Hände frei bleiben.

Die Anker können alternativ oder zusätzlich vorzugsweise selber Navigationsanweisungen in Form von Sprache und Pilotsignalen (Leitsignalen) geben.

Ein weiterer Vorteil des erfindungsgemäßen Leitsystems und Verfahrens ist, dass es nicht auf die genaue Lokalisation der Person in dem Gebäude oder Gelände durch das Leitsystem ankommt. Das Leitsystem und Verfahren ist daher einfach und kostengünstig. Mit dem Leitsystem und Verfahren kann der Benutzer auf einfache und zielgerichtete Weise an beispielsweise vom Gebäudeinhaber oder Geländeinhaber festgelegten Positionen gelotst werden. In einer Ausführungsform können Informationen über diese Positionen über das Erfassungsobjekt, beispielsweise das Mobiltelefon, und/oder unabhängig von dem Erfassungsobjekt, insbesondere unabhängig von dem Lautsprecher eines Mobiltelefons, über die akustischen Signalgeber ausgegeben werden.

Beispielhafte technische Herangehensweise zur Verbindung zwischen Anker und Erfassungsobjekt, beispielsweise einem Mobiltelefon:
Auf dem Erfassungsobjekt, bei dem es sich beispielsweise um ein Mobiltelefon handeln kann, kann eine erfindungsgemäße Software, beispielsweise eine App auf einem Mobiltelefon, zur Verwirklichung des erfindungsgemäßen Leitsystems vorzugsweise auch im Hintergrundmodus laufen und somit kann das Leiten der Person durch das Gebäude oder Gelände auch ohne direkte Nutzereingaben während des Begehens des Gebäudes oder Geländes aktiviert werden. Bei Mobiltelefonen mancher Hersteller und manchen Betriebssystem solcher Mobiltelefone werden strenge Forderungen an die Software gestellt, die im Hintergrundmodus läuft, um ein schnelles Entladen des Akkus zu vermeiden. Zusätzlich soll in vielen Fällen vermieden werden, dass persönliche Informationen des Nutzers im Hintergrundmodus weitergegeben werden. Daher stehen gerade Apps, die auch im Hintergrundmodus des Telefons aktiv betrieben werden, besonders im Fokus und müssen ganz besondere Bedingungen erfüllen, um dauerhaft zu funktionieren. Dies ist so, da Mobiltelefonbetriebssysteme andernfalls den Ablauf der App nach beispielsweise 180 Sekunden unterbinden, um die Akkukapazität möglichst lange auszuschöpfen. Um die erfindungsgemäße Software zur Verwirklichung des erfindungsgemäßen Leitsystems oder zur Ausführung des erfindungsgemäßen Verfahrens zum Leiten einer Person dauerhaft auch im Hintergrundmodus auf einem Erfassungsobjekt, beispielsweise einem Mobiltelefon, nutzen zu können, ist es allerdings nicht notwendig, dass diese im Hintergrundmodus aktiv betrieben wird. Beispielsweise wird dazu beim Starten der erfindungsgemäßen Software dem Betriebssystem des Erfassungsobjektes, beispielsweise des Mobiltelefons, mitgeteilt, auf welchen Identifikatorwert, beispielsweise eine 128-Bit UUID, es in der Umgebung des Erfassungsobjekts achten soll. Erfindungsgemäß kann den Ankern eine solche Kennung, beispielsweise nach dem Bluetooth- oder dem Bluetooth-Low-Energy-Standard, zugewiesen sein. Die Anker können diese in ihre Umgebung senden. Wird dieser Identifikatorwert vom Betriebssystem des Erfassungsobjekts erkannt, teilt das Betriebssystem dies der sich im Ruhemodus befindliche erfindungsgemäße Software mit und weckt diese damit auf. In einem solchen Szenario ist der Anker ein Central-Modul und das Erfassungsobjekt, beispielsweise das Mobiltelefon, ein Peripheral-Modul. Dies jedoch nur für den ersten Moment, um die Software aufzuwecken und dem Erfassungsobjekt mitzuteilen, dass eine Verbindung hergestellt werden soll. Anschließend wechseln beide Parteien (Erfassungsobjekt und Anker) die Rollen und somit ist das Erfassungsobjekt das Central(Client)- und der Anker das Peripheral-Modul (Server). Die Software auf dem Erfassungsobjekt initiiert dabei die Verbindung zu dem Anker und über diese Verbindung können in einem Ausführungsbeispiel alle relevanten Daten, beispielsweise über Services bzw. deren Characteristics, ausgetauscht werden, so dass der Anker weiß, wohin das Erfassungsobjekt geleitet werden soll und/oder das Erfassungsobjekt weiß, was der Anker an Informationen bereit hält. Bei einer Ausführungsform des erfindungsgemäßen Verfahrens und/oder des erfindungsgemäßen Leitsystems sind somit zu verschiedenen Zeitpunkten beide Funkteilnehmer (Anker und Erfassungsobjekt) mal Central und mal Peripheral. Somit ist gewährleistet, dass das Erfassungsobjekt, insbesondere ein Mobiltelefon, einerseits stromsparend betrieben werden, andererseits aber jederzeit auf Anker des erfindungsgemäßen Leitsystems reagieren kann und, wenn nötig, auch eine Verbindung zu den Ankern herstellen kann. Insbesondere kann dadurch ein Erfassen des Mobiltelefons durch die Erfassungseinheit ermöglicht werden, auch wenn die erfindungsgemäße Software zunächst stromsparend im Hintergrundmodus läuft.

Vorgehensweise bei einer akustischen Navigation durch Gebäude in einer beispielhaften Ausführungsform:
Um die Person durch das Gebäude oder das Gelände zu leiten, erstellt jeder Anker vorzugsweise selbstständig eine Route für die an den Anker ankommende Person anhand des von dem Erfassungsobjekt, das beispielsweise ein Mobiltelefons sein kann, vorzugsweise an den Anker übermittelten Ziels. Dies kann beispielsweise mit Hilfe von Kartenmaterial geschehen, das im Anker gespeichert und/oder auf den Anker über das Internet geladen werden kann. Das Leitsystem erstellt vorzugsweise je nach Bedingungen im Gebäude oder auch außerhalb, vorzugsweise jedes Mal bei einem an das System übermittelten Zielwunsch über das Ziel des Benutzers, eine den Bedingungen entsprechende bestmögliche Route. Der Anker stellt vorzugsweise zunächst fest, welche weiteren Anker in seiner Nähe (Hörweite) sind und filtert von den gefundenen Ankern diejenigen heraus, die sich in der Nähe der erstellten Route befinden. Von diesen Ankern wählt der Anker vorzugsweise denjenigen Anker aus, der am weitesten entfernt ist und kommuniziert, vorzugsweise über LAN oder WLAN, mit diesem Anker und teilt dem Anker mit, dass eine Person kommt und gibt ihm den Befehl das Pilotsignal (Leitsignal) über den Lautsprecher des Ankers zu senden. Ist die Person schließlich in der Nähe des nun aktiven Ankers erstellt dieser vorzugsweise wieder eigenständig die beste Route zu dem Ziel der Person und sucht vorzugsweise dementsprechend den nächsten passenden Anker gemäß dem oben beschriebenen Verfahren.

### Figuren:

Figur 1 zeigt eine Auswahl an Hinweistafeln, die Information ausschließlich visuell wahrnehmbar wiedergeben.
Figur 2 zeigt zwei Anker und ein Mobiltelefon eines Ausführungsbeispiels des erfindungsgemäßen Systems und einen Benutzer des Systems,
Figur 3 zeigt eine beispielhafte Anordnung eines Ankers eines Ausführungsbeispiels des Systems an dem Eingang einer Notfallaufnahme und einen Nutzer.

Erfindungsgemäß wird ein Leitsystem für sehbehinderte Personen geschaffen. Erfindungsgemäß wird eine Unterstützung von blinden und sehbehinderte Personen im öffentlichen Raum geboten. Mit dem erfindungsgemäßen Leitsystem und mit dem erfindungsgemäßen Verfahren kann beispielsweise eine blinde Person durch einen Raum oder ein Gelände geleitet werden.

Der Erfindung liegt unter anderem folgende Problemstellung zu Grunde: Die Orientierung in Gebäuden findet vorwiegend über visuelle Reize statt. Hinweistafeln, Wegbeschreibungen und Informationen liegen meist nur in schriftlicher bzw. visueller Form vor. Sehbehinderten Personen, Analphabeten oder auch leicht dementen Menschen helfen diese Informationen und Hinweise oft nicht, um in einem Gebäude an ihr Ziel zu gelangen. Der Erfindung liegt damit insbesondere das Problem zu Grunde wie auch diesen Personen geholfen werden kann, möglichst eigenständig Ihr Ziel, beispielsweise im Innern von Gebäuden, zu finden.

Information, z.B. auf Hinweistafeln, beispielsweise eine Wegbeschreibung oder eine Kennzeichnung eines Standorts einer Einrichtung eines Gebäudes oder eines Geländes (z.B. einer Toilette, einer Treppe, eines Aufzugs, eines Parkplatzes, eines Parkhauses, eines Restaurants oder Cafes, einer Apotheke, eines Informationsstands und/oder einer Garderobe) kann beispielsweise in Form von Piktogrammen, Symbolen, Wörtern, Sätzen und/oder einzelne Buchstaben vorliegen, die nur visuell wahrnehmbar sein können.

Solche Hinweistafeln können als Piktogramm oder Symbol visuell wahrnehmbar beispielsweise folgende Informationen geben: "Herrentoilette", "Einrichtung nur für Herren", "Einrichtung für Herren", "Toiletten für Damen und Herren", "Treppe aufwärts links", "Treppe aufwärts rechts", "Aufzug", "Pfeil nach rechts", "Pfeil nach schräg rechts oben", "Explosionsgefährlich", "Warnung vor explosionsgefährlichen Stoffen", "Warnung vor ätzenden Stoffen", "Warnung vor giftigen Stoffen", "Warnung vor feuergefährlichen Stoffen", "Warnung vor gesundheitsschädlichen oder reizenden Stoffen", "Warnung vor brandfördernden Stoffen", "Rollstuhlfahrer", "behindertengerechtes WC", "rollstuhlfahrergerechtes WC", "Fahrstuhl für Rollstuhlfahrer", "Damentoilette", "Einrichtung für Damen", "Einrichtung nur für Damen", "behindertengerechte Dusche", "rollstuhlfahrergerechte Dusche", "mit Rollstuhl befahrbare Rampe", "Telefon", "Parkplatz", "Parkhaus", "Apotheke", "Cafe", "Aschenbecher", "Dusche", "Information", "Atomkern mit Elektronenbahnen", "Essen und Trinken", "behindertengerechte Telefonzelle", " Hände waschen!", "Händewaschmöglichkeit", Darstellung eines Kopfes mit Verband und Kreuz, "Rauchen verboten", "Essen verboten", "Trinken verboten", "Damengarderobe", "Herrengarderobe", "Garderobe", "Arzt", "Krankenstation".

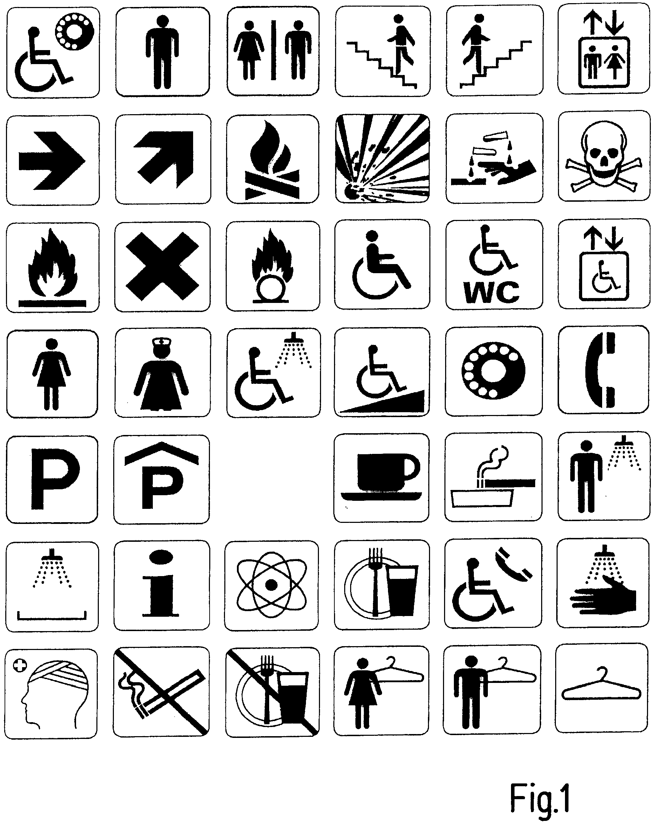

Figur 1 zeigt beispielhaft unterschiedliche Hinweis- und Informationstafeln, die visuell wahrnehmbare Hinweise und Informationen enthalten. Für sehbehinderte, insbesondere blinde, Personen können visuelle Information nicht oder nicht ausreichend wahrnehmbar sein, um sich in Räumen, beispielsweise einem Gebäude, oder einem Gelände zu orientieren und einen Weg durch den Raum oder das Gelände zu einem Ziel, z.B. zu einer Einrichtung des Gebäudes oder des Geländes, zu finden.

Mittels des erfindungsgemäßen Leitsystems und mittels des erfindungsgemäßen Verfahrens zum Leiten einer Person können Analphabeten sowie sehbehinderte, blinde und leicht demente Personen durch einen Raum oder ein Gelände geleitet werden; beispielsweise um eine solche Person zu einer festgelegten Position, diese kann beispielsweise ein festgelegter Bereich oder eine Einrichtung in dem Raum oder dem Gelände sein, in dem Raum oder dem Gelände zu leiten.

Folgende Ziele erreichen beispielhafte Ausführungsformen der Erfindung:
Orientierung - Vorzugsweise Orientierungsunterstützung von Analphabeten sowie von sehbehinderten, blinden und leicht dementen Personen. Navigation - Zusätzlich oder alternativ besteht vorzugsweise die Möglichkeit durch das Gebäude zu einem gewählten Ziel navigiert zu werden. Multilingualität - Um auch Ausländern Hinweise in der eigenen Sprache geben zu können, ist das System vorzugsweise auf Mehrsprachigkeit ausgelegt.

Das erfindungsgemäße Leitsystem und das erfindungsgemäße Verfahren kann Analphabeten sowie sehbehinderten, blinden und leicht dementen Personen eine Orientierungsunterstützung bieten. Das erfindungsgemäße Leitsystem und das erfindungsgemäße Verfahren bieten einer Person vorzugsweise zusätzlich die Möglichkeit, durch einen Raum, beispielsweise ein Gebäude, oder ein Gelände navigiert zu werden.

Die Ziele können mit einer beispielhaften Ausführungsform der Erfindung erreicht werden, in der beispielsweise mittels Bluetooth Low Energy Technologie die Besucher eines Gebäudes detektiert werden. Um die Besucher zu erfassen, können in dem Gebäude mehrere Bluetooth LE fähige Boxen sein, die Anker des Systems sind. Diese Anker können mit Lautsprechern ausgestattet sein und können an für die Orientierung relevanten Punkten angebracht werden. Die Anker können in einer Pilotphase zunächst im Akkubetrieb fungieren. Die Gegenstelle zu dem Anker bildet auf der Besucherseite vorzugsweise ein Mobiltelefon mit entsprechender App, welche vorzugsweise wahlweise auch vollständig im Hintergrundmodus und ohne Eingabe des Nutzers funktionieren kann.

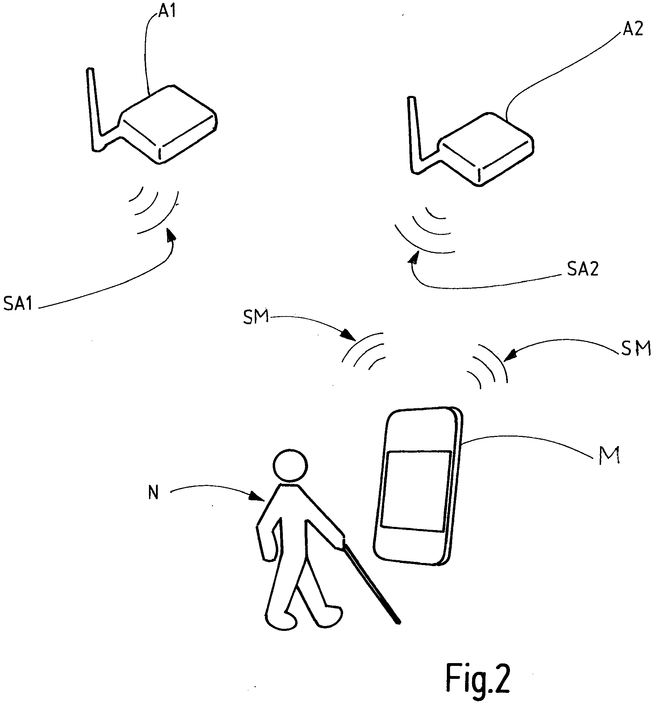

Figur 2 zeigt einen ersten Anker A1 und einen zweiten Anker A2 einer beispielhaften Ausführungsform des erfindungsgemäßen Leitsystems und eine Person N, die ein Benutzer des Leitsystems ist, und ein Mobiltelefon M als einem Beispiel für ein von dem Benutzer mitgeführtes Erfassungsobjekt, bei dem es sich insbesondere um ein Smartphone handeln kann. Der Anker A1, der Anker A2 sowie das Mobiltelefon M arbeiten nach dem Bluetooth-Standard, vorzugsweise nach dem Bluetooth-Low-Energy-Standard, für die Datenübertragung zwischen Geräten.

Das Mobiltelefon M kann mit dem Anker A1 und dem Anker A2 gemäß dem Bluetooth-Standard, vorzugsweise gemäß dem Bluetooth-Low-Energy-Standard, Daten austauschen. Das Mobiltelefon M kann dazu ein Signal SM nach dem Bluetooth-Standard, vorzugsweise nach dem Bluetooth-Low-Energy-Standard, ausgeben und/oder empfangen und verarbeiten ebenso wie der Anker A1 ein Signal SA1 nach dem Bluetooth-Standard, vorzugsweise nach dem Bluetooth-Low-Energy-Standard, und der Anker A2 ein Signal SA2 nach dem Bluetooth-Standard, vorzugsweise dem Bluetooth-Low-Energy-Standard, ausgeben und/oder empfangen und verarbeiten können.

Um die Besucher eines Gebäudes mittels Funktechnologie, beispielsweise mittels Bluetooth Low Energy Technologie, zu detektieren, können in dem Gebäude mehrere Anker, die fähig sind, Funksignale zu senden und/oder zu empfangen, beispielsweise Bluetooth Low Energy fähige Anker A1, A2 (s. beispielsweise Fig. 2), an für die Orientierung relevanten Punkten angebracht sein. Um Leitsignale an den oder die Besucher abzugeben, können die Anker (z.B. Anker A1, A2) mit Lautsprechern ausgestattet sein. Die Anker (z.B. Anker A1, A2) können beispielsweise im Akkubetrieb arbeiten. Um ein Gebäude testweise mit einem erfindungsgemäßen System auszurüsten, können die Anker (z.B. Anker A1, A2) zumindest zunächst, beispielsweise in einer Pilotphase, im Akkubetrieb arbeiten. Die Gegenstelle zu dem Anker (z.B. Anker A1, A2) bildet auf der Besucherseite ein Erfassungsobjekt, beispielsweise ein Mobiltelefon M (s. Figur 2), das vorzugsweise eine entsprechende Software (App) aufweisen kann. Die Software kann beispielsweise im Hintergrundmodus arbeiten. Die Software kann ohne Eingabe des das System nutzenden Besuchers (Nutzers) funktionieren. Insbesondere kann die Software (App) vorzugsweise wahlweise auch vollständig im Hintergrundmodus und ohne Eingaben des Nutzers (beispielsweise Besucher N, s. Figur 2) funktionieren. Das Erfassungsobjekt, z.B. Mobiltelefon M, bildet ein Erfassungsobjekt, das die Person (z.B. Nutzer N, s. Figur 2), die das Gebäude besucht und die das Leitsystem nutzen möchte, mitführt.

Eine bevorzugte Ausführungsform, beispielsweise eine oben beschriebene Ausführungsform, der Erfindung kann folgende Funktionen haben: Beim Betreten des Gebäudes wird der Besucher automatisch erfasst. Wünscht der Nutzer über die Handy-App eine Navigation kann er mittels Pilotsignal (Leitsignal, wie man es von Fußgängerampeln kennt) zu dem Anker gelotst werden. Die Ausführungsform kann insbesondere derart ausgebildet sein, dass folgende Funktionen möglich sind: Im Nahbereich eines Ankers endet das Pilotsignal und es werden dem Orientierungspunkt entsprechende Hinweise akustisch in der gewünschten Sprache ausgegeben. Neben dem Anker selber kann vorzugsweise auch das Mobiltelefon die Nachrichten akustisch wiedergeben - dabei ist vorzugsweise die Vorlesegeschwindigkeit und auch das Überspringen einzelner Punkte (Hinweise) möglich. Will der Nutzer zu einem anderen Punkt gelotst werden, entscheidet das System vorzugsweise selbstständig, welcher Anker als nächstes Ziel fungiert und damit das Pilotsignal auslöst. Neben dem Pilotsignal ist vorzugsweise optional eine Navigationsempfehlung mittels Wegbeschreibung möglich.

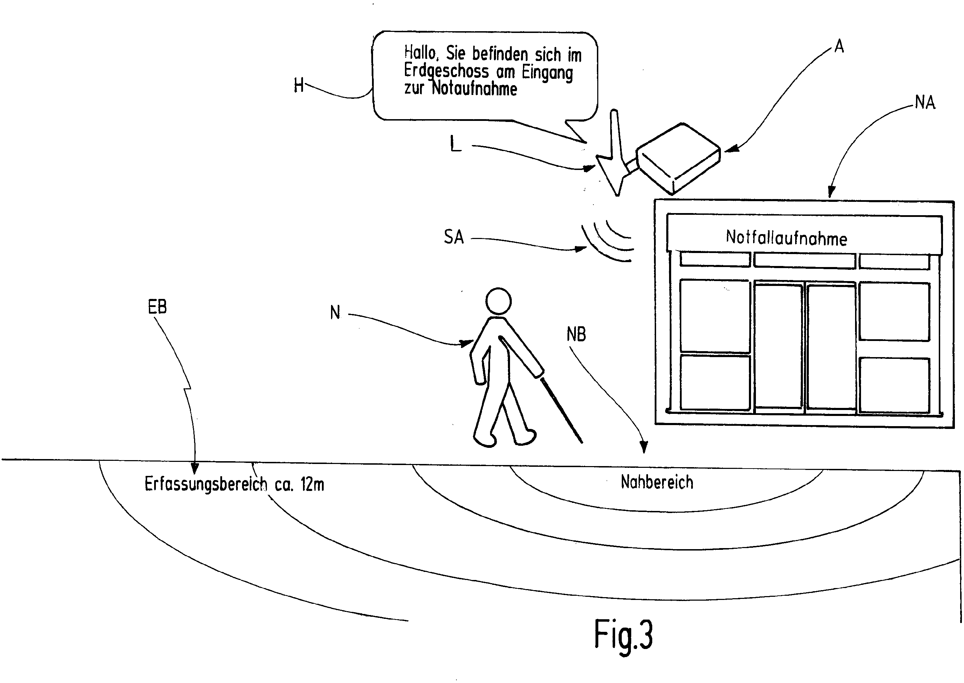

Eine bevorzugte Funktion des Systems ist auch in Figur 3 dargestellt:
Figur 3 zeigt einen Nutzer N eines Ausführungsbeispiels des erfindungsgemäßen Leitsystems bzw. des erfindungsgemäßen Verfahrens. Der Anker A des beispielhaften Leitsystems arbeitet nach dem Bluetooth-Standard, beispielsweise dem Bluetooth Low Energy Standard. Insbesondere kann der Anker A vorzugsweise ein Signal SA nach dem Bluetooth-Standard, beispielsweise dem Bluetooth Low Energy-Standard, abgeben und/oder empfangen und verarbeiten. In Figur 3 ist ein Nahbereich NB und ein Erfassungsbereich EB dargestellt. Zudem ist ein Eingang einer Notfallaufnahme NA gezeigt. Der Anker gibt über einen Lautsprecher L den Sprachhinweis H "Hallo, Sie befinden sich im Erdgeschoss am Eingang zur Notaufnahme" akustisch an den Nutzer N aus.

In einer beispielhaften Ausführungsform kann der Besucher beispielsweise beim Betreten des Gebäudes automatisch erfasst werden. Für den Fall, dass der Nutzer, beispielsweise über eine Handy-App, eine Navigation wünscht, kann er mittels Pilotsignal (Leitsignal, wie man es von Fußgängerampeln kennt) zu einem Anker gelotst werden. Im Nahbereich eines Ankers kann das Pilotsignal enden und/oder es können dem Orientierungspunkt entsprechende Hinweise akustisch, beispielsweise in der gewünschten Sprache, ausgegeben werden. Zusätzlich oder alternativ zu dem Anker selber kann vorzugsweise das Mobiltelefon die Nachricht akustisch wiedergeben, dabei ist die Beeinflussung der Vorlesegeschwindigkeit und auch das Überspringen einzelner Punkte (Hinweise) vorzugsweise möglich. Beispielsweise kann die Vorlesegeschwindigkeit mit der das Mobiltelefon die Nachricht wiedergibt änderbar und/oder anpassbar sein und/oder der Nutzer kann auswählen, einzelne Hinweise zu Überspringen. Will der Nutzer zu einem anderen Punkt gelotst werden, entscheidet das System vorzugsweise selbstständig, welcher Anker als nächstes Ziel dient und damit das Pilotsignal auslöst. Zusätzlich zu dem Pilotsignal ist vorzugsweise eine Navigationsempfehlung mittels Wegbeschreibung möglich. Diese kann beispielsweise von dem Erfassungsobjekt, beispielsweise einem Mobiltelefon, und/oder dem Anker ausgegeben werden.

Ein zum Datenaustausch mittels des Bluetooth-Standards fähiger Anker des Systems kann beispielsweise an dem Eingang einer Notaufnahme angeordnet sein. Der Anker kann beispielsweise den Hinweis in akustisch wahrnehmbarer Sprache "Hallo, Sie befinden sich im Erdgeschoss am Eingang zur Notaufnahme" an den Nutzer abgeben, wenn der Nutzer N einen Nahbereich NB des Ankers A innerhalb des Erfassungsbereichs EB des Ankers A betritt. Der Anker A kann den Hinweis vorzugsweise auf Grund des Betretens des Nahbereichs NB durch den Nutzer N abgeben. Der Erfassungsbereich, in dem die Erfassungseinheit (Anker) A das Erfassungsobjekt (z.B. Mobiltelefon M) erfassen kann, kann in beispielhaften Ausführungsformen eine Abmessung, beispielsweise einen Radius oder einen Durchmesser, aufweisen, die zwischen 10 und 100 Metern liegt. Der Erfassungsbereich, in dem die Erfassungseinheit (Anker) A das Erfassungsobjekt (z.B. Mobiltelefon M) erfassen kann, kann in einem Ausführungsbeispiel eine Abmessung, beispielsweise einen Radius oder einen Durchmesser, von ca. 12 Metern aufweisen.

Vorteile von beispielhaften Ausführungsformen des erfindungsgemäßen Systems und des erfindungsgemäßen Verfahrens:
- Für den Nutzer:
   - Erleichterung der Orientierung in Gebäuden ohne fremde Hilfe
   - Ermöglicht den betreffenden Personen mehr Eigenständigkeit und damit eine Steigerung ihrer Lebensqualität
   - Durch die Funktionalität der Handy-App im Hintergrund bleiben die Hände frei und es ist kein Zusatzgerät erforderlich
- Für den Betreiber:
   - Höhere Stufe der Barrierefreiheit
   - Mehr potentielle Besucher in den ausgestatteten Gebäuden
   - Auch Ausländern kann ermöglicht werden, Hinweise in Ihrer Sprache präsentiert zu bekommen.

Beispielhafte Ausführungsformen des erfindungsgemäßen Leitsystems und der erfindungsgemäßen Verfahrens bieten unter anderen die folgenden Vorteile: Dem Nutzer kann die Orientierung in Gebäuden ohne fremde Hilfe erleichtert werden. Den betreffenden Personen, insbesondere sehbehinderten, beispielsweise blinden, Personen, kann mehr Eigenständigkeit und damit eine Steigerung ihrer Lebensqualität ermöglicht werden. Durch die vorzugsweise bereitgestellte Funktionalität der Handy-App im Hintergrund bleiben die Hände vorzugsweise frei und es ist vorzugsweise kein Zusatzgerät erforderlich. Das Leitsystem und das Verfahren können zu dem die Vorteile einer höheren Stufe der Barrierefreiheit und mehr potentieller Besucher in den mit dem System ausgestatteten Gebäuden bieten. Auch Ausländern kann ermöglicht werden, Hinweise in Ihrer Sprache präsentiert zu bekommen.

Für die Montage einer beispielhaften Ausführungsform des Leitsystem können folgende Hinweise auf optionale Eigenschaften des Leitsystems wichtig sein: Um den normalen Ablauf in dem Gebäude nicht zu stören, ist die Lautstärke der Anker vorzugsweise individuell gestaltbar - insbesondere kann der Nachtbetrieb vorzugsweise gesondert eingestellt werden, um eine Ruhestörung zu vermeiden. Die Konfiguration und auch die Aktualisierung der Anker geschieht vorzugsweise über das LAN oder WLAN-Netz, so dass daher vorzugsweise keine Demontage der Anker für eine Änderung der Software nötig ist. In einem Pilotbetrieb einer beispielhaften Ausführungsform des Leitsystems können die Anker im Akkubetrieb funktionieren, so dass vorzugsweise zunächst keine baulichen Veränderungen an den Decken oder Wänden vorzunehmen sind.

Das sehbehinderten Leitsystem soll es Sehbehinderten erleichtern, sich besser in Gebäuden zu orientieren.

### Bezugszeichenliste:

| | |
|---|---|
| A1 | erster Anker (erste Erfassungseinheit) |
| A2 | zweiter Anker (zweite Erfassungseinheit) |
| N | Nutzer |
| M | Mobiltelefon |
| SM | Signal nach dem Bluetooth-Standard |
| SA1 | Signal nach dem Bluetooth-Standard |
| SA2 | Signal nach dem Bluetooth-Standard |
| A | Anker (Erfassungseinheit) |
| SA | Signal nach dem Bluetooth-Standard |
| NB | Nahbereich |
| EB | Erfassungsbereich |
| NA | Eingang Notfallaufnahme |
| L | Lautsprecher |
| H | Hinweis |

## Patentansprüche

1. Leitsystem für Personen, insbesondere für sehbehinderte Personen, zum Leiten der Person (N) durch einen Raum oder ein Gelände, bei dem es sich beispielsweise um einen geschlossenen Raum (z.B. ein Gebäude) oder einen offenen Bereich (z.B. einen Park, einen Marktplatz oder eine Straßenkreuzung) handeln kann, mit
wenigstens einer Erfassungseinheit (A, A1, A2) mit einem Erfassungsbereich (EB) zum Erfassen der Person (N) in dem Raum oder Gelände,
wenigstens einem, vorzugsweise akustischen, Signalgeber (L), der dazu eingerichtet ist, ein, vorzugsweise akustisches, Leitsignal an die Person (N) unter der Bedingung abzugeben, dass die Person (N) durch die Erfassungseinheit (A, A1, A2) erfasst wurde, um der Person (N) zu ermöglichen, ihre Position in Bezug auf den Signalgeber (L) in dem Raum oder Gelände, beispielsweise mittels akustischer Wahrnehmung des Leitsignals, zu lokalisieren,
wobei die Erfassungseinheit (A, A1, A2) dazu eingerichtet ist, die Person (N) zu erfassen, indem die Erfassungseinheit (A, A1, A2) ein von der Person (N) mitgeführtes Erfassungsobjekt (M) erfasst.

2. Leitsystem nach Anspruch 1, wobei die Erfassungseinheit (A, A1, A2) dazu eingerichtet ist, die Anwesenheit oder die Position des Erfassungsobjektes (A, A1, A2) in dem Erfassungsbereich (EB) der Erfassungseinheit (A, A1, A2) zu erfassen.

3. Leitsystem nach einem der vorhergehenden Ansprüche, wobei die Erfassungseinheit (A, A1, A2) dazu eingerichtet ist, das Erfassungsobjekt (M) zu erfassen, indem die Erfassungseinheit (A, A1, A2) ein von dem Erfassungsobjekt (M) abgegebenes Erfassungssignal empfängt, das beispielsweise ein Funksignal sein kann.

4. Leitsystem nach einem der vorhergehenden Ansprüche, wobei die Erfassungseinheit (A, A1, A2) zur Abgabe eines Aktivierungssignals eingerichtet ist und wobei das Erfassungsobjekt (M) dazu eingerichtet ist, durch das Empfangen des Aktivierungssignals in einen Betriebsmodus versetzt zu werden, in dem das Erfassungsobjekt (M) das Erfassungssignal abgibt, um durch die Erfassungseinheit (A, A1, A2) erfasst zu werden.

5. Leitsystem nach einem der vorigen Ansprüche, wobei ein oder mehrere Signalgeber (L) in einer Erfassungseinheit (A, A1, A2) integriert sind.

6. Leitsystem nach einem der vorhergehenden Ansprüche mit einem ersten Signalgeber (L) und einem zweiten Signalgeber, wobei das Leitsystem zur Navigation der Person durch den Raum oder das Gelände eingerichtet ist, indem mittels der Erfassungseinheit (A, A1, A2) festgestellt wird, wenn die Person einen Nahbereich (NB) an dem ersten Signalgeber (L) betritt, und unter der Bedingung, dass das Betreten des Nahbereichs (NB) festgestellt wurde,
die Stärke des Leitsignals des ersten Signalgebers (L), insbesondere die Lautstärke eines akustischen Leitsignals des Signalgebers (L), reduziert wird oder die Leitsignalabgabe des ersten Signalgebers (L) unterbrochen oder ausgeschaltet wird und/oder
der erste Signalgeber (L) einen der Position des ersten Signalgebers (L) entsprechenden Hinweis (H) akustisch an die Person (N) ausgibt und/oder
der zweite Signalgeber, der beispielsweise näher an einem gewünschten Ziel der Person in dem Raum oder Gelände sein kann als der erste Signalgeber, ein von der Person wahrnehmbares, insbesondere akustisches Signal, abgibt.

7. Leitsystem nach Anspruch 6, wobei das Leitsystem derart eingerichtet ist, dass mittels der Erfassungseinheit (A, A1, A2) festgestellt wird, wenn die Person (N) einen Nahbereich (NB) an dem ersten Signalgeber (L) betritt, und dass auf Grund der Feststellung ein der Position des Signalgebers (L) entsprechender Hinweis (H), vorzugsweise akustisch, an die Person (N) durch das Erfassungsobjekt (M) ausgegeben wird.

8. Leitsystem nach einem der vorhergehenden Ansprüche, wobei das Erfassungsobjekt (M) dazu eingerichtet ist, der Erfassungseinheit (A, A1, A2), insbesondere zum Erfassen des Erfassungsobjektes (M) durch die Erfassungseinheit (A, A1, A2), Daten zu übermitteln und/oder wobei die Erfassungseinheit (A, A1, A2) dazu eingerichtet ist, Daten an das Erfassungsobjekt (M) zu übermitteln.

9. Leitsystem nach Anspruch 8, wobei die Datenübermittlung nach dem Bluetooth-Standard, insbesondere nach dem Bluetooth-Low-Energy-Standard, arbeitet.

10. Leitsystem nach einem der vorigen Ansprüche, wobei das Erfassungsobjekt (M) des Leitsystems ein mobiles, tragbares elektronisches Gerät, beispielsweise ein Mobiltelefon, beispielsweise ein Smartphone, ein Tablet-Computer, ein tragbarer Computer, beispielsweise ein Laptop, oder ein tragbares digitales Medienabspielgerät, ist.

11. Leitsystem nach einem der vorhergehenden Ansprüche, wobei ein oder mehrere Signalgeber (L) und/oder ein oder mehrere Erfassungseinheiten (A, A1, A2) an festen Positionen in dem Raum oder dem Gelände angeordnet sind.

12. Leitsystem nach einem der vorhergehenden Ansprüche, mit wenigstens einer mobilen, tragbaren Erfassungseinheit mit Signalgeber, um die Erfassungseinheit an wechselnden Positionen im Raum oder im Gelände anordnen zu können.

13. Verfahren zum Leiten einer Person, insbesondere einer sehbehinderten Person, mit einem Leitsystem nach einem der vorherigen Ansprüche, wobei das Verfahren die Schritte umfasst:
- Erfassen des von der Person (N) mitgeführten Erfassungsobjektes (M) mittels der Erfassungseinheit (A, A1, A2),
- auf Grund des Erfassens des Erfassungsobjekts (M), Veranlassen des Signalgebers (L) zur Leitsignalabgabe an die Person (N), so dass die Person (N) das Leitsignal wahrnimmt, so dass die Person (N) die Position des Signalgebers (L) auf Grund des Leitsignals lokalisieren kann.

14. Verfahren nach Anspruch 13 mit den Schritten:
- Abgeben eines Aktivierungssignals durch die Erfassungseinheit (A, A1, A2),
- Erfassen des Aktivierungssignals durch das Erfassungsobjekt (M),
- Einschalten eines Betriebsmodus des Erfassungsobjekts (M) bei dem Erfassen des Aktivierungssignals, in dem Betriebsmodus das Erfassungsobjekt (M) ein Erfassungssignal an die Erfassungseinheit (A, A1, A2) abgibt, so dass die Erfassungseinheit (A, A1, A2) das von der Person mitgeführte Erfassungsobjekt (M) erfasst.

15. Verfahren nach Anspruch 13 oder 14 mit den Schritten,
- Betreten eines Nahbereichs (NB) an dem Signalgeber (L) als einem ersten Signalgeber,
- Übermitteln eines gewünschten Ziels in dem Raum oder Gelände an eine Navigationseinheit, wobei die Navigationseinheit beispielsweise in den ersten Signalgeber (L) und/oder einen weiteren Signalgeber und/oder eine Erfassungseinheit (A, A1, A2) integriert sein kann,
- Feststellen einer Route durch den Raum oder das Gelände zu dem Ziel durch die Navigationseinheit,
- Ermitteln einer Gruppe Signalgeber in Hörweite von dem ersten Signalgeber (L) durch die Navigationseinheit, wobei das Ermitteln beispielsweise durch Ermitteln der weiteren Signalgeber aus einer Datenbank erfolgen kann,
- Ermitteln einer Untergruppe derjenigen Signalgeber der Gruppe, die an der Route angeordnet sind,
- Veranlassen eines der Signalgeber der Untergruppe, vorzugsweise desjenigen Signalgebers, der am weitesten von dem ersten Signalgeber (L) entfernt ist, zur Abgabe eines Leitsignals an die Person (N).

16. Verfahren nach einem der vorstehenden Ansprüche 13 bis 15, wobei auf dem Erfassungsobjekt (M) des Leitsystems eine Software zum Initiieren einer Verbindung zu einer Erfassungseinheit (A, A1, A2) lauffähig ist, wobei
dem Betriebssystem des Erfassungsobjekts (M) mitgeteilt wird, auf welchen Identifikatorwert es in der Umgebung des Erfassungsobjekts (M) achten soll, wobei den Erfassungseinheiten (A, A1, A2) eine solche Kennung zugewiesen ist, die diese in ihre Umgebung senden,
das Betriebssystem, wird dieser Identifikatorwert vom Betriebssystem des Erfassungsobjekts (M) erkannt, dies der Software mitteilt und diese damit aufweckt,
die Software auf dem Erfassungsobjekt (M) die Verbindung zu der Erfassungseinheit (A, A1, A2) initiiert, um über diese Verbindung Daten auszutauschen.

17. Verfahren nach Anspruch 16, wobei die Erfassungseinheit (A, A1, A2) ein Central-Modul und das Erfassungsobjekt (M) ein Peripheral-Modul ist, um die Software aufzuwecken und dem Erfassungsobjekt (M) mitzuteilen, dass eine Verbindung hergestellt werden soll,
wobei das Erfassungsobjekt (M) und die Erfassungseinheit (A, A1, A2) anschließend die Rollen wechseln, so dass das Erfassungsobjekt (M) das Central-Modul und die Erfassungseinheit (A, A1, A2) das Peripheral-Modul ist.

18. Verfahren nach einem der Ansprüche 16 bis 17, wobei über die Verbindung Daten ausgetauscht werden, so dass die Erfassungseinheit (A, A1, A2) weiß, wohin das Erfassungsobjekt (M) geleitet werden soll und/oder das Erfassungsobjekt (M) weiß, was die Erfassungseinheit (A, A1, A2) an Informationen bereithält.
